# EUROPEAN PATENT SPECIFICATION

(11) **EP 0 616 623 B1**
(45) Date of publication and mention of the grant of the patent: **21.03.2001**
(21) Application number: 93923464.7
(22) Date of filing: 14.10.1993
(51) Int. Cl.: C08L 67/02

(54) **POLYMERIC ALLOYS FROM POLYESTER RESINS AND PROCESS FOR THEIR PREPARATION**
POLYMERLEGIERUNGEN AUS POLYESTERHARZEN UND VERFAHREN ZU IHRER HERSTELLUNG
ALLIAGES POLYMERES A PARTIR DE RESINES POLYESTER ET LEUR PROCEDE DE PREPARATION

(30) Priority: 15.10.1992 IT MI922373
(43) Date of publication of application: 28.09.1994
(73) Proprietor: SINCO RICERCHE S.p.A., 28048 Verbania Pallanza (Verbania) (IT)
(72) Inventor: AL GHATTA, Hussain, Ali, Kashif, I-03014 Fiuggi (IT)
(74) Representative: Gerbino, Angelo
(86) International application number: EP9302834
(87) International publication number: WO9409069

(56) References cited:
- EP-A- 0 143 875
- EP-A- 0 422 282
- WO-A-92/17519
- US-A- 3 553 157
- DATABASE WPI Week 8949, Derwent Publications Ltd., London, GB; AN 89-361780 & JP,A,1 272 660 (UBE INDUSTRIES KK) 31 October 1989
- DATABASE WPI Week 7141, Derwent Publications Ltd., London, GB; Class A23, AN 71-66091S & JP,B,46 035 377 (TORAY INDS INC)
- CHEMICAL ABSTRACTS, vol. 71, no. 22, 01 December 1969, Columbus, Ohio, US; abstract no. 103056T, OKAZAKI, KAORU ET AL 'Modified polyamides' page 81; & JP,B,44 011 669 (TOYO RAYON CO., LTD.) 28 May 1969
- Rosato's Plastics Encyclopedia and Dictionary, p. 16, Carl Hanser Verlag, Munich, 1993.

## Description

The present invention relates to an improved process for the preparation of polymeric products from polyester resins and polymers containing reactive end groups.

The polymeric alloys from polyester resins and from resins such as polycarbonate, polyamides were so far obtained by blending in the molten state optionally operating in the presence of functional compounds able to react with the resin end groups.

The properties of these alloys are not satisfactory due to side reactions such as transesterification, transamidation and degradation, which occur in the molten state. Due to the degradation reactions, it was not possible moreover to prepare resins with molecular weight high enough to enable good mechanical properties of the polymeric alloys.

EP-A-0 422 282 discloses a method for increasing the molecular weight of aromatic polyester resins by polycondensing the resins in the solid state in the presence of a dianhydride of a tetracarboxylic acid.

JP-A-1 272 660 discloses the extrusion of a blend of a polyester and a polyamide resin in the presence of a dianhydride of a tetracarboxylic acid.

A method has now been found which allows to prepare polymeric products with unexpectedly high mechanical properties by reacting resins mixtures in the solid state in the presence of polyfunctional compound containing at least two groups capable of reacting with addition reactions with the resins end groups.

The polyester resin, the resin containing reactive groups and the functional compound are blended in the molten state; the mixture is then pelletized and the chips are then subjected to the solid state polyaddition reaction.

The polyaddition reaction in the solid state is generally preceded by a crystallization step carried out after the melt state mixture stage and after the following pelletizing. The crystallization step is carried out to prevent agglomeration phenomena of chips and/or of sticking on the reactor wall during the reaction in the solid state.

The crystallization step is carried out at temperatures higher than the TG of the polyester and comprised in general between 130° and 180°C.

The process of preparation is preferably carried out in continuous way using continuous crystallizers and polyaddition reactors where the chips are fed counter currently to a stream of a heated gas, e.g. air, nitrogen and other inert gas, such as carbon dioxide. The polyaddition reaction in the solid state is carried out at temperatures higher than 150°C and lower than the melting pbint of the polyester resins. The temperatures are in general comprised between 180° and 210°C. The residence time depends on the increase of the required intrinsic viscosity and of the mechanical properties. The viscosity increase is at least 0.1 dl/g in comparison with the starting polyester resin. The treatment is carried out in an inert gas stream in a fluid bed or fluidized reactor.

The polyfunctional compound is preferably selected from the group consisting of pyromellitic acid dianhydride, 3,3' 4,4' biphenyltetracarboxylic acid, bis (3,4-dicarboxyphenyl) ether, bis (3,4 dicarboxyphenyl) thiother, 3,4 dicarboxylic acid, bisphenol A, 2,2 - bis (3,4 dicarboxyphenyl) hexafluoropropane, 2,3,6,7 naphtalenetetracarboxylic acid, bis (3,4 dicarboxyphenyl) sulfone, 1,2,5,6 - naphtalenetetracarboxylic acid, 3,2' 3,3' - biphenyltetracarboxylic acid, bis (3,4 dicarboxyphenyl) sulfoxide, 3,4,9,10 - perylene tetracarboxylic acid and mixtures thereof.

The aromatic dianhydrides most preferred are the pyromellitic dianhydride and 3,3' 4,4' benzophenonetetracarboxylic acid dianhydride and mixtures thereof.

Besides the dianhydrides of the above mentioned tetracarboxylic aromatic acids can be also used the dianhydrides of aliphatic, cycloaliphatic and tetrahydrofurantetracarboxylic acids.

Representative compounds are 1,2,3,4 cyclobutanetetracarboxylic acid and tetrahydrofuran 2,3,4,5 - tetracarboxylic acid.

The blending of the polyester resin with the resins containing reactive end groups and with polyfunctional compound is preferably carried out in corotating or counter rotating, intermeshing or not intermeshing twin screw extruders with or without degassing equipment, at a temperature between 200° and 350°C depending on the melting point of the mixture of the polymers.

A counter rotating and not intermeshing screws extruder is preferred.

The use of such a type of extruder allows to perform a good distribution of the polyfunctional compound in the melt and to avoid problems of local high concentrations of the additive due to its high reactivity.

This type of extruder allows very short residence times.

The extruder is preferably connected with a high vacuum oil seal pump to maintain a vacuum higher than 2 tor to carry out the dosing of the reactive mixture and to obtain a resin with a low content of acethaldehyde.

The preferred concentration of additive with respect to the polyester resin is 0.05-1% by weight.

The residence time in the extruder can be comprised between 10 and 120 sec. preferably 15-30 sec.

To avoid random local concentrations of additive in the melt it is advisable to dilute the additive with crystallized PET powder (1 part of additive to 3 parts of PET powder).

This procedure ensures a homogeneous distribution of additive leading to a better reproducibility of the end product intrinsic viscosity and inhibiting gel formation.

The additive may also be diluted using crystallized PET chips (1 part additive to 10 parts of PET chips).

The blending could be performed in a fanned blender using 0,1% by weight of adhesive agent.

The polyester resins usable in the invention process are the product of polycondensation of glycols with 2-10 carbon atoms, such as ethylene glycol, 1,4-butyleneglycol, 1,4 cyclohexylenglycol, with terephthalic acid or derivatives thereof such as dimethylterephthalate, as well as the polycondensation products containing besides units deriving from terephthalic acid, also units deriving from other bicarboxylic acids such as naphthalendicarboxylic acids isophtalic acid, orthophtalic acid and 5-tert-butyl-1,3-benzenedicarboxylic acid in a quantity of about 0.5-25% mole of all acid units.

Among the polyester resins the elastomeric polyester resins are also included and in general are included block polyester copolymers containing blocks deriving from the polycondensation of a glycol with an aromatic bicarboxylic acid.

The starting polyester resin has an intrinsic viscosity lower than 0.8 dl/g and generally between 0.6 and 0.75 dl/g.

The preferred resins are polyethyleneterephthalate and copolyethyleneterephthalates containing up to 20% of unit deriving from isophtalic acid. The reactive resins different from the polyester resins are polyamides resins. These resins are characterized by the repeating unit - NH CO'-; the ponderal molecular weights are generally included between 10,000 and 50,000. Examples of these resins are Nylon 4, Nylon 6,6, Nylon 6, Nylon 8, Nylon 11, Nylon 12.

The reactive resins are used in a quantity of about 1-50% preferably 5-20% by weight: on the weight of the mixture.

The products obtained using the polyamides are characterized by a very high elastic module without sacrificing the tensile strength and elongation at break. Films obtained from alloys prepared starting from polyamides, present values of the elastic modulus varing between 4.2 and 5 GPa following the stretch ratio in the range between 3-5, while the reference polyester shows values in the range between 3.3 and 2.2 GPa and the alloys obtained without using the polyfunctional compound (piromellitic dianydride) have values of the modulus in the range between 2.4-2.9 GPa.

### EXAMPLE 1

10 Kg/h of a mixture at 95% by weight of crystalline PET (IV=0.601 dl/g) and at 5% by weight of 6,6 Nylon (the mixture is dried vacuum at 140°C for 10h) were fed together at 0.05% by weight of pyromellitic dianhydride (PMDA) to a counter rotating and not intermishing twin screw extruder.

The mixture was extruded and also pelletized. The chip intrinsic viscosity was 0.694 dl/g; the COOH groups content =52.2 eq/ton. The extrusion conditions were as follows:

| | |
|---|---|
| Ratio length/diameter (L/D) | = 36 |
| Screw speed | = 150 rpm |
| Cylinder temperature | = 260°C |
| Chips feed speed | = 10 Kg/h |
| PMDA feed speed | = 0.05 Kg/h |
| mould type | = circular with 3 mm dia. |

The so obtained chips were subjected to upgrading at 186°C for 6 hours in nitrogen stream. The intrinsic viscosity after the treatment was of 0,927 dl/g and the COOH groups as 49 eq/ton.

The obtained polymer was then extruded continuously (before drying) in a monoscrew extruder for film. The film was collected on chilled rollers and then on rollers heated at 85°C and then on collecting cylinder. The stretch ratio used was of 3:1 in a test, of 4:1 in a second test and of 5:1 in a third one.

The films mechanical properties are shown in table 1.

### Comparative example 1

A mixture at 95% by weight of crystalline PET (IV=0,601 dl/g) and at 5% of 6,6 Nylon (dried vacuum at 140°C for 10h) was extruded and pelletized in the conditions as in example 1.

The chips were then subjected to upgrading under the same conditions as in example 1.

The obtained polymer intrinsic viscosity was of 0,786 dl/g and the groups concentration COOH of 21.4 eq/ton.

The chips were also extruded in the extruder for films of example 1 in the same conditions there indicated. The obtained film was collected with stretch ratio of 3:1, 4:1 and 5:1 in the different tests.

The film properties are shown in table 1

### Comparative example 2

PET with IV=0.83 dl/g was filmed under the conditions of example 1 using the same stretch ratios.

The film properties are shown in table 1.

**Table 1**

| Stretch ratio | Module GP a | Tensile strength MP a | Max.strain % |
|---|---|---|---|
| Ex.1 | | | |
| 3 | 4.2 | 94 | 14 |
| 4 | 4.9 | 163 | 42 |
| 5 | 5.0 | 183 | 22 |

| Ex.1 comparison | | | |
|---|---|---|---|
| 3 | 2.4 | 71 | 91 |
| 4 | 1.9 | 113 | 61 |
| 5 | 2.9 | 189 | 24 |

| Ex.2 comparison | | | |
|---|---|---|---|
| 3 | 3.3 | 103 | 155 |
| 4 | 3.8 | 142 | 69 |
| 5 | 2.2 | 230 | 23 |

The tensile strength was determined according to ASTMD-882 using a INSTRON tensile tester (Mod. 4505) on samples at 25°C and with 50% of relative humidity.

The elastic modulus was determined from the slope at the stress-strain curve.

The intrinsic viscosity was determined in a solution of 0,5 g of polymer in 100 ml, of a solution at 60/40 by weight of phenol and tetraclorethane, operating at 25°C according to ASTM D-4603-86.

## Claims

1. Process for the production of polymeric products starting from a polyester resin having intrinsic viscosity lower than 0.8 dl/g, a polyamide and a functional compound containing at least two groups reactive with the end groups of the polyamide, comprising following operations:
a) blending in the molten state the polyester resin, the polyamide in amount between 1 and 50% by weight on the mixture and the functional compound in amounts from 0.05 to 1% by weight on the polyester resin;
b) pelletizing the molten mixture;
c) polyaddition treatment in the solid state at temperatures higher than 150°C and lower than the melting point of the polyester resin, operating in a fluid bed or in a fluidized reactor in a stream of inert gas for a time sufficient to obtain an increase of at least 0.1 dl/g of the intrinsic viscosity of the polymeric product referred to the intrinsic viscosity of the starting polyester resin.

2. Process according to claim 1, wherein the polyamide is selected among Nylon 4, Nylon 6, Nylon 6,6, Nylon 8, Nylon 11, Nylon 12.

3. Process according to claims 1 or 2 wherein the polyamide is used in quantity from 5 to 20% by weight.

4. Process according to any one of claims 1, 2 and 3, wherein the functional compound is selected from the group consisting of pyromellitic acid dianhydride, 3,3' 4,4' biphenyltetracarboxylic acid, bis (3,4-dicarboxyphenyl) ether, bis (3,4 dicarboxyphenyl) thiother, 3,4 dicarboxylic acid, bisphenol A, 2,2 - bis (3,4 dicarboxyphenyl) hexafluoropropane, 2,3,6,7 naphtalenetetracarboxylic acid, bis (3,4 dicarboxyphenyl) sulfone, 1,2,5,6 - naphtalenetetracarboxylic acid, 3,2' 3,3' - biphenyltetracarboxylic acid, bis (3,4 dicarboxyphenyl) sulfoxide, 3,4,9,10 - perylene tetracarboxylic acid and dianhydrides of aliphatic, cycloaliphatic and tetrahydrofurantetracarboxylic acids and mixtures thereof.

5. Process according to claim 4, wherein the dianhydride is pyromellitic dianhydride.

6. Polymeric products obtainable by the process as defined in claims 1, 2, 3, 4 or 5.

7. Polymeric products according to claim 6 wherein the functional compound containing at least two reactive groups is selected from the group consisting of pyromellitic acid dianhydride, 3,3' 4,4' biphenyltetracarboxylic acid, bis (3,4-dicarboxyphenyl) ether, bis (3,4 dicarboxyphenyl) thiother, 3,4 dicarboxylic acid, bisphenol A, 2,2 - bis (3,4 dicarboxyphenyl) hexafluoropropane, 2,3,6,7 naphtalenetetracarboxylic acid, bis (3,4 dicarboxyphenyl) sulfone, 1,2,5,6 - naphtalenetetracarboxylic acid, 3,2' 3,3' - biphenyltetracarboxylic acid, bis (3,4 dicarboxyphenyl) sulfoxide, 3,4,9,10 - perylene tetracarboxylic acid and dianhydrides of aliphatic, cycloaliphatic and tetrahydrofurantetracarboxylic acids and mixtures thereof.

8. Polymeric products according to claim 7, wherein the dianhydride is pyromellitic dianhydride.

9. Polymeric products according to claims 6, 7 or 8, wherein the polyamide is selected from Nylon 4, Nylon 6, Nylon 6,6, Nylon 8, Nylon 11 and Nylon 12.

10. Manufactured articles obtainable from polymeric products of claims 6, 7, 8 and 9.

## Patentansprüche

1. Verfahren zur Produktion polymerer Produkte ausgehend von einem Polyesterharz, welches eine innere Viskosität unter 0.8 dl/g aufweist, einem Polyamid und einer funktionellen Verbindung, welche zumindest zwei Gruppen enthält, die mit den Endgruppen des Polyamids reagieren, das folgende Verfahrensschritte umfasst:
a) Im geschmolzenen Zustand Vermischen des Polyesterharzes, des Polyamids in einer Menge von 1 bis 50 Gewichtsprozent bezogen auf die Mischung und der funktionellen Verbindung in einer Menge von 0,05 bis 1 Gewichtsprozent bezogen auf das Polyesterharz;
b) Pelletieren der geschmolzenen Mischung;
c) Polyadditions-Behandlung im festen Zustand bei Temperaturen über 150°C und unter dem Schmelzpunkt des Polyesterharzes, durchgeführt in einem Fließbett oder in einem Wirbelschichtreaktor in einem Strom eines inerten Gases über eine Zeitdauer, die ausreichend ist, um einen Anstieg der inneren Viskosität des polymeren Produktes von mindestens 0,1 dl/g, bezogen auf die innere Viskosität des anfänglichen Polyesterharzes zu erhalten.

2. Verfahren gemäß Anspruch 1, wobei als Polyamid Nylon 4, Nylon 6, Nylon 6,6, Nylon 8, Nylon 11 oder Nylon 12 gewählt wird.

3. Verfahren gemäß Anspruch 1 oder 2, wobei das Polyamid in einer Menge von 5 bis 20 Gewichtsprozent verwendet wird.

4. Verfahren gemäß einer der Ansprüche 1, 2 und 3, wobei die funktionelle Verbindung aus der Gruppe bestehend aus Pyromellitsäuredianhydrid, 3,3' 4,4' Diphenyltetracarbonsäure, bis (3,4-Dicarboxyphenyl) Ether, bis (3,4 Dicarboxyphenyl) Thiother, 3,4 Dicarbonsäure, Bisphenol A, 2,2-bis (3,4 Dicarboxyphenyl) Hexafluoropropan, 2,3,6,7 Naphthalentetracarbonsäure, bis (3,4 Dicarboxyphenyl) Sulfon, 1,2,5,6-Naphthalentetracarbonsäure, 3,2' 3,3'-Diphenyltetracarbonsäure, bis (3,4 Dicarboxyphenyl) Sulfoxid, 3,4,9,10-Perylentetracarbonsäure und Dianhydride aliphatischer Säuren, cycloaliphatischer Säuren und Tetrahydrofurantetracarbonsäuren sowie Mischungen davon gewählt wird.

5. Verfahren gemäß Anspruch 4, wobei das Dianhydrid Pyromellitdianhydrid ist.

6. Polymere Produkte, wie sie aus dem Verfahren gemäß den Ansprüchen 1, 2, 3, 4 oder 5 erzeugt werden können.

7. Polymere Produkte gemäß Anspruch 6, wobei die funktionelle Verbindung, welche zumindest zwei reaktive Gruppen enthält, aus der Gruppe bestehend aus Pyromellitsäuredianhydrid, 3,3' 4,4' Diphenyltetracarbonsäure, bis (3,4-Dicarboxyphenyl) Ether, bis (3,4 Dicarboxyphenyl) Thiother, 3,4 Dicarbonsäure, Bisphenol A, 2,2-bis (3,4 Dicarboxyphenyl) Hexafluoropropan, 2,3,6,7 Naphthalentetracarbonsäure, bis (3,4 Dicarboxyphenyl) Sulfon, 1,2,5,6-Naphthalentetracarbonsäure, 3,2' 3,3'-Diphenyltetracarbonsäure, bis (3,4 Dicarboxyphenyl) Sulfoxid, 3,4,9,10-Perylentetracarbonsäure und Dianhydride aliphatischer Säuren, cycloaliphatischer Säuren und Tetrahydrofurantetracarbonsäuren sowie Mischungen davon gewählt wird.

8. Polymere Produkte gemäß Anspruch 7, wobei das Dianhydrid Pyromellitdianhydrid ist.

9. Polymere Produkte gemäß den Ansprüchen 6, 7 oder 8, wobei als Polyamid Nylon 4, Nylon 6, Nylon 6,6, Nylon 8, Nylon 11 oder Nylon 12 gewählt wird.

10. Industriell gefertigte Produkte, wie sie aus polymeren Produkten der Ansprüche 6, 7, 8 und 9 erzeugt werden können.

## Revendications

1. Procédé de fabrication de produits polymères en partant d'une résine polyester ayant une viscosité intrinsèque inférieure à 0,8 dl/g, d'un polyamide et d'un composé fonctionnel contenant au moins deux groupes réactifs avec les groupes terminaux du polyamide, comprenant les opérations suivantes :
a) l'incorporation à l'état fondu dans la résine polyester du polyamide, en une quantité entre 1 et 50 % en poids du mélange, et du composé fonctionnel en des quantités de 0,05 à 1 % en poids de la résine polyester ;
b) le pastillage du mélange à l'état fondu ;
c) le traitement par polyaddition à l'état solide à des températures supérieures à 150°C et inférieures au point de fusion de la résine polyester, en opérant dans un lit fluidisé ou dans un réacteur fluidisé, dans un flux de gaz inerte pendant une durée suffisante pour obtenir une augmentation d'au moins 0,1 dl/g de la viscosité intrinsèque du produit polymère par rapport à la viscosité intrinsèque de la résine polyester de départ.

2. Procédé selon la revendication 1, dans lequel le polyamide est choisi parmi le Nylon 4, le Nylon 6, le Nylon 6,6, le Nylon 8, le Nylon 11, le Nylon 12.

3. Procédé selon les revendications 1 ou 2, dans lequel le polyamide est utilisé en une quantité de 5 à 20 % en poids.

4. Procédé selon l'une quelconque des revendications 1, 2 et 3, dans lequel le composé fonctionnel est choisi dans le groupe constitué par le dianhydride de l'acide pyromellitique, l'acide 3,3',4,4'-biphényltétracarboxylique, l'éther bis(3,4-dicarboxyphénylique), le thioéther bis(3,4-dicarboxyphénylique), l'acide 3,4-dicarboxylique, le bisphénol A, le 2,2-bis(3,4-dicarboxyphényl)hexafluoropropane, l'acide 2,3,6,7-naphtalène-tétracarboxylique, la bis(3,4-dicarboxyphényl) sulfone, l'acide 1,2,5,6-naphtalène-tétracarboxylique, l'acide 3,2',3,3'-biphényltétracarboxylique, le bis(3,4-dicarboxyphényl) sulfoxyde, l'acide 3,4,9,10-pérylènetétracarboxylique et les dianhydrides des acides aliphatiques, cycloaliphatiques et tétrahydrofuranne-tétracarboxyliques et leurs mélanges.

5. Procédé selon la revendication 4, dans lequel le dianhydride est le dianhydride pyromellitique.

6. Produits polymères susceptibles d'être obtenus par le procédé défini dans les revendications 1, 2, 3, 4 ou 5.

7. Produits polymères selon la revendication 6, dans lesquels le composé fonctionnel contenant au moins deux groupes réactifs est choisi dans le groupe constitué par le dianhydride de l'acide pyromellitique, l'acide 3,3',4,4'-biphényltétracarboxylique, l'éther bis(3,4-dicarboxyphénylique), le thioéther bis(3,4-dicarboxyphénylique), l'acide 3,4-dicarboxylique, le bisphénol A, le 2,2-bis(3,4-dicarboxyphényl)hexafluoropropane, l'acide 2,3,6,7-naphtalène-tétracarboxylique, la bis(3,4-dicarboxyphényl) sulfone, l'acide 1,2,5,6-naphtalène-tétracarboxylique, l'acide 3,2',3,3'-biphényl-tétracarboxylique, le bis(3,4-dicarboxyphényl) sulfoxyde, l'acide 3,4,9,10-pérylène-tétracarboxylique et les dianhydrides des acides aliphatiques, cycloaliphatiques et tétrahydrofuranne-tétracarboxyliques et leurs mélanges.

8. Produits polymères selon la revendication 7, dans lesquels le dianhydride est le dianhydride pyromellitique.

9. Produits polymères selon les revendications 6, 7 ou 8, dans lesquels le polyamide est choisi parmi le Nylon 4, le Nylon 6, le Nylon 6,6, le Nylon 8, le Nylon 11, le Nylon 12.

10. Articles fabriqués susceptibles d'être obtenus à partir des produits polymères selon les revendications 6, 7, 8 et 9.
